# EUROPÄISCHE PATENTSCHRIFT

(11) **EP 2 606 781 B1**
(45) Veröffentlichungstag und Bekanntmachung des Hinweises auf die Patenterteilung: **26.02.2014**
(21) Anmeldenummer: 11401668.6
(22) Anmeldetag: 19.12.2011
(51) Int. Cl.: A47J 31/44

(54) **Getränkebereiter**
Drink preparing device
Appareil de préparation de boissons

(43) Veröffentlichungstag der Anmeldung: 26.06.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 1 733 661
- WO-A1-2009/027053

## Beschreibung

Die Erfindung betrifft einen Getränkebereiter nach dem Oberbegriff des Patentanspruches 1.

Getränkebereiter können beispielsweise Espressomaschinen, Kaffeemaschinen, Kaffeeautomaten, Teebereiter, Saftzentrifugen oder ähnliche Geräte beziehungsweise Kombinationen aus den genannten Geräten sein.

Aus der WO 2009/027053 A1 ist zum Beispiel ein Kaffeeautomat als Getränkebereiter bekannt, der als Einbaugerät in einem Küchenschrank ausgeführt ist. In einer Tür des Getränkebereiters ist ein Ausgabebereich in Form einer Vertiefung ausgebildet, in den ein Getränkeauslauf mit mehreren Ausgabedüsen mündet und in dem eine weitere Ausgabedüse zur Abgabe einer Flüssigkeit oder zur Abgabe von Wasserdampf vorhanden ist. In den Getränkebereiter ist ferner ein Flüssigkeitsbehälter lösbar eingesetzt, der hierbei beispielsweise mit Milch für die Zubereitung eines aus Kaffee und Milch bestehenden Mischgetränkes gefüllt ist. Ein zum Abstellen eines mit dem Getränk zu befüllenden Gefäßes geeigneter Boden wurde als eine für Resttropfen des Getränkes oder anderer Flüssigkeiten durchlässige Abtropfplatte ausgeführt, wobei sich an der Innenseite der Tür und unterhalb der Abtropfplatte eine fest installierte Auffangschale zum Auffangen der bei geöffneter Tür tropfenweise abgegebenen Getränke- und/oder Flüssigkeitsreste befindet. Die an der Innenseite der Tür befestigte Auffangschale hat jedoch den Nachteil, dass sie zu ihrer Reinigung einen gewissen manuellen Aufwand und auch etwas Geschick erfordert. Zur Komfortverbesserung eines Getränkebereiters sollte dieser Aufwand jedoch möglichst verhindert oder wenigstens reduziert werden.

Der Erfindung stellt sich somit das Problem, einen Getränkebereiter zur Verfügung zu stellen, dessen Auffangschale einen minimierten Reinigungsaufwand erfordert.

Erfindungsgemäß wird dieses Problem durch einen Getränkebereiter mit den Merkmalen des Patentanspruches 1 gelöst.

Vorteilhafte Ausgestaltungen und Weiterbildungen der Erfindung ergeben sich aus den jeweils nachfolgenden Unteransprüchen.

Ein Getränkebereiter zur Herstellung unterschiedlicher Getränke, als Einbaugerät in einem Küchenschrank, mit einer Tür und einem in der Tür ausgebildeten Ausgabebereich, in den zumindest ein Getränkeauslauf mündet und in dem ein zum Abstellen eines mit dem Getränk zu befüllenden Gefäßes geeigneter Boden als eine für Reste des Getränkes oder anderer Flüssigkeiten durchlässige Abtropfplatte ausgeführt ist, wobei sich unterhalb der Abtropfplatte eine geräteseitig angebrachte Abtropfschale zum Auffangen der Flüssigkeitsreste sowie an der Innenseite der Tür eine Auffangschale zum Auffangen der bei geöffneter Tür tropfenweise abgegebenen Getränke- und/oder Flüssigkeitsreste befindet, wurde erfindungsgemäß dahingehend weitergebildet, dass an der Innenseite der Tür eine Halterung vorhanden ist, in die die Auffangschale lösbar eingesetzt ist.

Die mit der Erfindung erreichbaren Vorteile bestehen darin, dass die lösbar eingesetzte Auffangschale mühelos aus ihrer Halterung entnommen und getrennt von dem Getränkebereiter gereinigt werden kann. Die Reinigung kann im einfachsten Fall in einer Geschirrspülmaschine erfolgen, so dass hierbei jegliche Handarbeit entfällt. Die Lösung bietet darüber hinaus den wesentlichen Vorteil, dass auch bereits im Einsatz befindliche Getränkebereiter mit einer derartigen Auffangschale nachgerüstet werden können.

Eine erste Ausgestaltung der Erfindung besteht darin, dass die Halterung mit der Auffangschale bei geschlossener Tür unterhalb der Abtropfschale angeordnet ist. Da die Abtropfschale dazu gedacht ist, größere Flüssigkeitsmengen aufzunehmen, die beispielsweise bei Spülvorgängen oder während der Reinigungsprozesse eines Getränkebereiters entstehen, ist sie entsprechend dimensioniert und würde sich daher nicht als Bestandteil der schwenkbaren Tür eignen. Deshalb wird die Abtropfschale geräteseitig montiert. Mit dem Lösungsvorschlag, die Auffangschale bei geschlossener Tür unterhalb der Abtropfschale anzuordnen, können daher Kollisionen zwischen der mit der Tür schwenkbaren Auffangschale und der geräteseitig befestigten Abtropfschale verhindert werden. Zudem gelangen Flüssigkeitsreste nur bei geöffneter Tür in die Auffangschale.

Ein hierzu alternativer Vorschlag geht dahin, dass die in der Tür vorhandene Halterung mit der Auffangschale bei geschlossener Tür in eine hierfür in der Abtropfschale ausgebildete Mulde eingeführt ist. Diese Lösung bietet den Vorteil, dass innerhalb des Getränkebereiters wertvoller Bauraum eingespart werden kann, indem die Abtropfschale eine zur Aufnahme der Auffangschale beziehungsweise der Halterung geeignete und baulich angepasste Mulde aufweist.

Der Aufwand zur Reinigung der Auffangschale kann darüber hinaus wesentlich verringert werden, wenn die Auffangschale aus geschirrspülmaschinenfestem Kunststoff besteht. Somit ist es möglich, nach der Entnahme der Auffangschale aus der Halterung eine Reinigung innerhalb eines Geschirrspülers vorzunehmen. Dem Fachmann steht eine reichliche Auswahl geeigneter Kunststoffe zur Verfügung, aus denen die Auffangschale bestehen kann.

Zur Erleichterung des Einsetzens der Auffangschale in die Halterung ist es ferner von Vorteil, wenn die Auffangschale eine zu der Innengeometrie der Halterung komplementär ausgebildete Außenoberfläche aufweist, sodass die Auffangschale passgenau in die Halterung einsetzbar ist. Diese Maßnahme ist auch deshalb vorteilhaft, weil die Auffangschale somit rutschfest und gesichert innerhalb der Halterung aufgenommen ist, so dass darin enthaltene Flüssigkeit nicht durch unerwünschte Bewegungen der Auffangschale überlaufen und dadurch beispielsweise die Innenseite des Getränkebereiters verunreinigen kann.

Wird darüber hinaus die Auffangschale mit einem Randflansch ausgestattet, der breiter ausgeführt ist, als die darunter befindliche Halterung, wie es eine Weiterbildung der Erfindung vorsieht, so stellt dies eine Erleichterung der Entnahme beziehungsweise des Einsetzens der Auffangschale dar.

Diesem Gedanken folgend kann die Auffangschale ebenso zumindest einen als Griff ausgebildeten Abschnitt aufweisen. Dabei besteht die Möglichkeit, den Griff unmittelbar an der Auffangschale anzuformen beziehungsweise zu befestigen oder ihn an dem verstärkten Randflansch auszubilden beziehungsweise zu montieren. Bei einer Fertigung der Auffangschale aus Kunststoff lässt sich der Griff unmittelbar bei der Fertigung anformen, was einen erheblichen fertigungstechnischen Vorzug darstellt.

Um das mit einem Getränk zu befüllenden Gefäß abstellen zu können, weisen Getränkebereiter der hier in Rede stehenden Art Abtropfplatten auf. Diese Abtropfplatten werden zumeist gitterartig aus Edelstahl, Aluminium oder Kunststoff hergestellt, wobei andere Materialien möglich sind. Eine gitterartige Struktur der Abtropfplatte hat jedoch den Nachteil, dass sie relativ schwierig zu reinigen ist, auch wenn die Möglichkeit besteht, die Abtropfplatte herauszunehmen und beispielsweise in einer Geschirrspülmaschine zu reinigen, da sich erfahrungsgemäß insbesondere in Eckbereichen Ablagerungen bilden können, die auch in einer Geschirrspülmaschine nicht oder nur unter erschwerten Bedingungen zu reinigen sind. Daher wird gemäß einer weiteren Ausgestaltung der Erfindung vorgeschlagen, dass die herausnehmbare Abtropfplatte zumindest eine Öffnung zur Abführung der Flüssigkeitsreste aufweist. Mit dieser Maßnahme ist die Abtropfplatte als weitgehend geschlossene Fläche, ebenflächig ausgeführt und dadurch insgesamt weniger strukturiert. Die Reinigung der Abtropfplatte wird dadurch erheblich vereinfacht.

Ein diesen Lösungsgedanken aufgreifender, weiterer Vorschlag nach der Erfindung geht dahin, dass die Abtropfplatte zumindest eine der Anzahl der Ausgabedüsen entsprechende Anzahl Öffnungen aufweist und die Öffnungen jeweils nur unmittelbar unter den vorhandenen Ausgabedüsen angeordnet sind.

Zur Verbesserung der Reinigungsmöglichkeit und des Ablaufs der durch die Abtropfplatte in das Innere des Getränkebereiters gelangten Flüssigkeitsreste ist es von Vorteil, wenn unterhalb der Abtropfplatte eine Senke mit wenigstens einer zentralen Abflussöffnung ausgebildet ist. Die Senke führt dazu, dass auch verspritzte Flüssigkeitsreste stets dort ankommen, wo sie gesammelt und entsprechend entsorgt werden können, nämlich in der unterhalb der Abtropfplatte und der Senke vorhandenen Abtropfschale.

Von besonderem Vorteil ist es dabei, wenn die Senke von den Randbereichen der Abtropfplatte ausgehend bis zu der mindestens einen, als Abfluss dienenden Öffnung hin verläuft, sie sich also, mit anderen Worten gesagt, über die gesamte Breite des innerhalb des Ausgabebereiches der Tür des Getränkebereiters vorhandenen Bodens erstreckt.

Zur Erleichterung der Entnahme beziehungsweise des Einsetzens der Abtropfplatte ist es hilfreich, wenn die Abtropfplatte einen Griff oder eine Grifföffnung aufweist. Diese vorteilhafte Ausgestaltung der Erfindung kann in einer konkreten Ausführung darin bestehen, dass in der Abtropfplatte eine Öffnung vorgesehen wird, die ausreichend ist, um mit einem Finger hineinzugreifen und damit die Abtropfplatte anzuheben beziehungsweise in die hierfür im Getränkebereiter vorhandene Aufnahme einzusetzen.

Die Erfindung wird nachfolgend anhand der beigefügten Zeichnungen näher erläutert. Die gezeigten Ausführungsbeispiele stellen keine Einschränkung auf die dargestellten Varianten dar, sondern dienen lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt
- Figur 1:: eine perspektivische Sicht auf die Frontseite einer Tür eines Getränkebereiters,
- Figur 2:: ausschnittsweise eine vereinfachte Schnittdarstellung im Bereich des Getränkeauslaufs,
- Figur 3:: ausschnittsweise eine Ansicht der Innenseite der Tür,
- Figur 4:: den vergrößerten Ausschnitt IV aus Figur 3,
- Figur 5:: eine räumliche Darstellung einer Auffangschale als Einzelteil,
- Figur 6:: eine im Vergleich zur Figur 1 abgewandelte Ausführung der Tür eines Getränkebereiters
und
- Figur 7:: ein Beispiel für eine Abtropfplatte in räumlicher Ansicht und als Einzelteil.

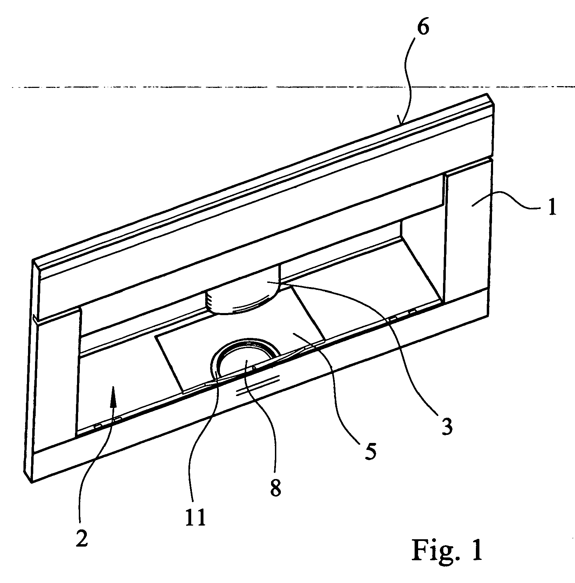

Die Figur 1 veranschaulicht am Beispiel eines Kaffeeautomaten einen Getränkebereiter in einer ersten Ausführungsvariante der Erfindung, wobei hier nur die frontseitige Tür 1 des Getränkebereiters dargestellt ist. Die Tür 1 weist geräteseitig, also zur Innenseite 6 der Tür 1 hin, eine Vertiefung auf, die als Ausgabebereich 2 dient. Im oberen Teil des Ausgabebereiches 2 befindet sich ein Getränkeauslauf 3, der für die Getränkeabgabe erforderlich ist. Der Getränkeauslauf 3 kann mittels eines hierzu geeigneten Antriebs oder manuell in vertikaler Richtung verschoben werden, so dass dadurch das Getränk unmittelbar in ein unterhalb des Getränkeauslaufs 3 abgestelltes Gefäß abgegeben wird, ohne dass es zu nennenswerten Spritzern kommt. Das in der Figur 1 nicht gezeigte Gefäß wird auf dem Boden des Ausgabebereiches 2 auf einer hierzu geeigneten Abtropfplatte abgestellt. Die Abtropfplatte wurde in der Figur 1 ebenfalls nicht dargestellt, um einen Einblick unter die Abtropfplatte zu ermöglichen. Hier befindet sich nämlich im vorliegenden Fall eine Abtropfschale 5, in der Flüssigkeiten, wie sie beispielsweise für Reinigungszwecke in einem derartigen Getränkebereiter anfallen, oder Getränkereste aufgefangen und gesammelt werden. Die Besonderheit in der dargestellten Ausführungsvariante eines Getränkebereiters besteht darin, dass an der Innenseite 6 der Tür 1, im Bereich der Abtropfschale 5, eine Halterung 7 mit einer lösbar darin eingesetzten Auffangschale 8 vorhanden ist. Die Abtropfschale 5 weist ferner in diesem Bereich eine Mulde auf, in die beim Schließen der Tür 1 die Halterung 7 mit der Auffangschale 8 eingeführt werden kann, so dass dadurch wertvoller Bauraum innerhalb des Getränkebereiters gespart wird.

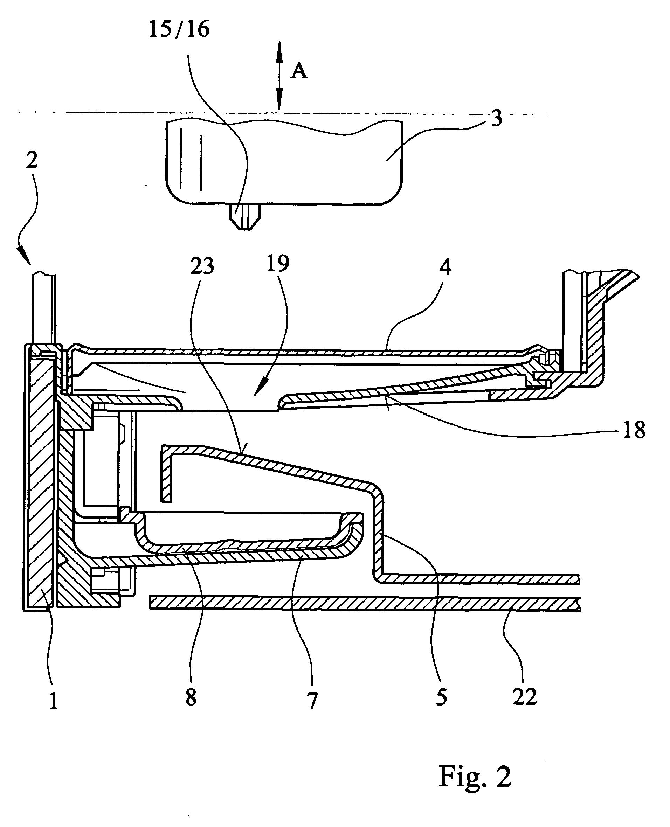

Aus der Schnittdarstellung in Figur 2 geht eine weitere Ausführungsform eines erfindungsgemäßen Getränkebereiters hervor. Auch dieser Getränkebereiter verfügt über einen Getränkeauslauf 3 mit Ausgabedüsen 15,16. Der Getränkeauslauf 3 ist in Richtung des Doppelpfeils "A", also vertikal, verschiebbar ausgeführt und innerhalb des Ausgabebereiches 2 der Tür 1 angeordnet. Unterhalb des Getränkeauslaufs 3 weist der Getränkebereiter einen Boden auf, der durch eine Abtropfplatte 4 gebildet ist und zum Abstellen eines mit einem Getränk zu befüllenden Gefäßes dient. Die Abtropfplatte 4 deckt in optisch ansprechender Weise die darunter befindlichen Auffangbehälter ab. Unterhalb der Abtropfplatte 4 befindet sich zunächst eine Senke 18, die unmittelbar in eine Öffnung 19 mündet, so dass nach Entnahme des Gefäßes noch aus dem Getränkeauslauf 3 abgegebene Getränkereste oder Reinigungs- beziehungsweise Spülflüssigkeiten durch eine hierfür in der Abtropfplatte 4 vorhandene Öffnung auf die Senke 18 und anschließend durch die Öffnung 19 abgeführt werden. Diese Flüssigkeitsreste können somit in die unter der Öffnung 19 vorhandene Abtropfschale 5 gelangen, wo sie aufgefangen und gesammelt werden. Die geräteseitig montierte Abtropfschale 5 verfügt zum Auffangen der Flüssigkeitsreste in ihrem unter der Öffnung 19 vorhandenen Randbereich über einen Randflansch 23, dessen Ausformung und Neigung derart ausgeführt sind, dass durch die Öffnung 19 abgeführte Flüssigkeitsreste entlang des Randflansches 23 in die Abtropfschale 5 gelangen können. Der Randflansch 23 dient jedoch auch zur Abdeckung einer darunter befindlichen und an der Innenseite 6 der Tür 1 ausgebildeten Halterung 7, in die eine Auffangschale 8 lösbar eingesetzt ist. Die unmittelbar über dem Geräteboden 22 vorhandene Auffangschale 8 dient bei geöffneter Tür dazu, die eventuell aus dem Getränkeauslauf 3 heraus tropfenden Reste des Getränks oder anderer Flüssigkeiten aufzufangen. Die Auffangschale 8 ist lösbar in die Halterung 7 eingesetzt, um ihre Entnahme zu erleichtern und dadurch die Reinigungsmöglichkeit der Auffangschale 8 zu verbessern.

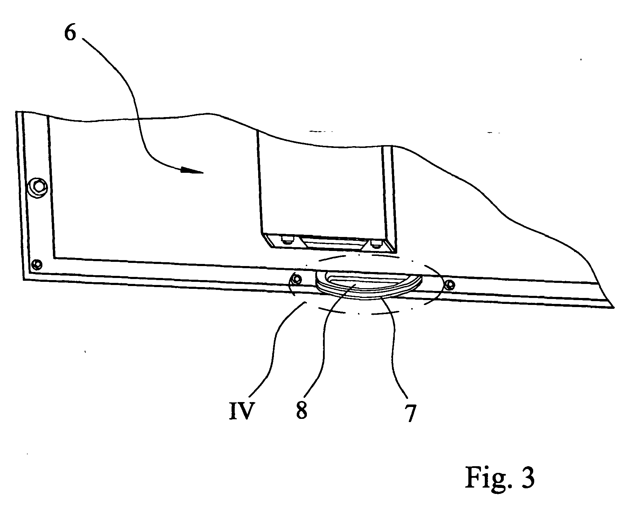

Aus der ausschnittsweisen Darstellung in Figur 3 geht die Rückseite 6 der Tür 1 des Getränkebereiters hervor. Hieraus wird ersichtlich, dass die Halterung 7 mit der darin eingesetzten Auffangschale 8 im unteren Bereich der Innenseite 6 der Tür 1 angebracht ist.

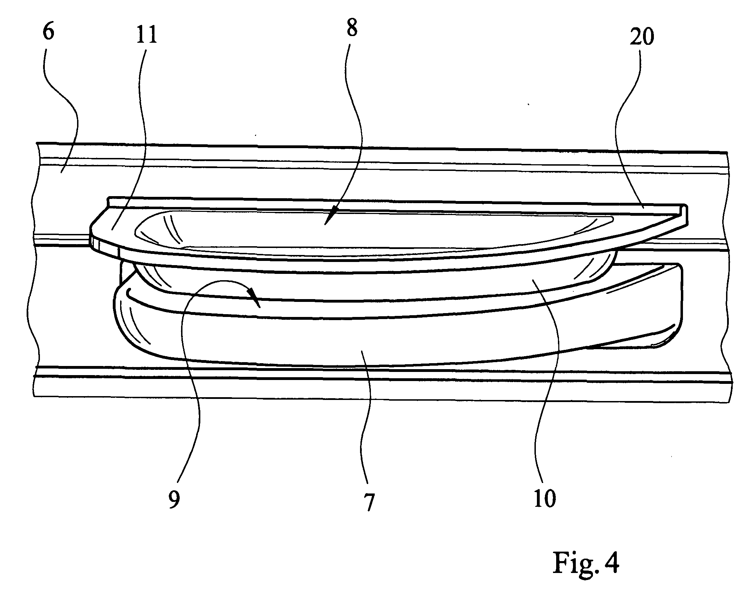

Die Figur 4 zeigt in vergrößerter Ansicht den Ausschnitt IV aus Figur 3. Es wird erkennbar, dass die Auffangschale 8 eine Außenoberfläche 10 aufweist, die passgenau in die hierzu korrespondierende Innengeometrie 9 der Halterung 7 passt. Somit ist die Auffangschale 8 passgenau und rutschfest in der Halterung 7 aufgenommen. Zudem verfügt die Auffangschale 8 über einen verbreiterten Randflansch 11, mit dem sie auf dem Randbereich der Halterung 7 aufliegt. Durch den entstehenden Überstand kann der Randflansch 11 als Griff genutzt werden, sodass die Entnahme sowie das Einsetzen der Auffangschale 8 in die Halterung 7 vereinfacht ist. Zur verbesserten Anlage an der Innenseite 6 der Tür 1 verfügt die Auffangschale 8 zudem über einen Steg 20.

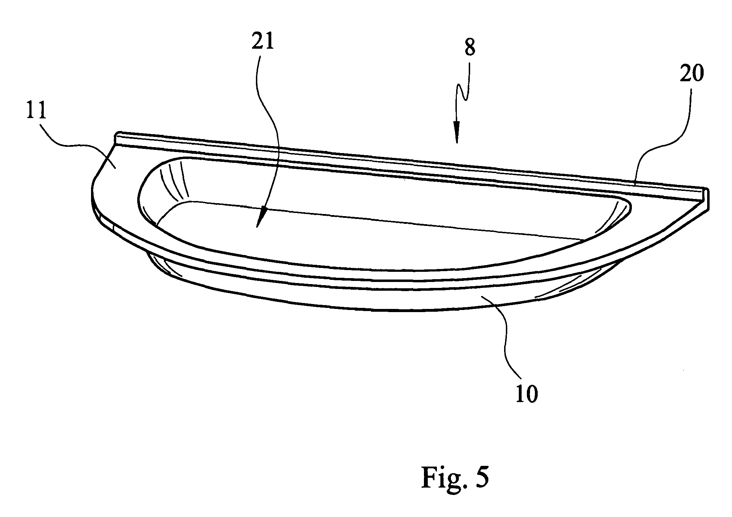

In der Figur 5 ist eine Auffangschale 8 als separates Einzelteil dargestellt. Der Blick in die Auffangschale 8 zeigt, dass diese eine muldenförmig vertiefte Innenoberfläche 21 aufweist, die dazu dient, in der zuvor beschriebenen Weise die Getränkereste oder Flüssigkeitsreste aufzunehmen und aufzubewahren.

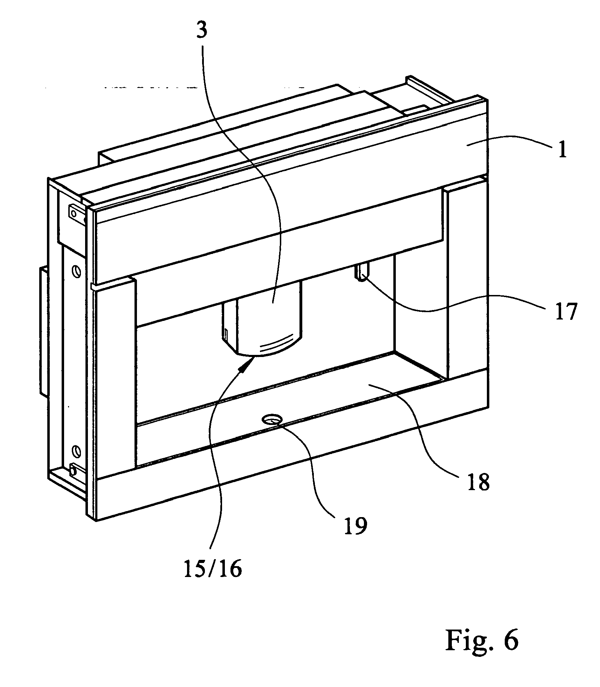

Aus der Figur 6 geht eine weitere Ausführungsvariante eines erfindungsgemäßen Getränkebereiters hervor, wobei hier eine vereinfachte, perspektivische Darstellung der Tür 1 des Getränkebereiters zu sehen ist. Innerhalb des Ausgabebereiches 2 ist wie auch bei den zuvor beschriebenen Beispielen ein Getränkeauslauf 3 mit Ausgabedüsen 15, 16 vertikal beweglich angeordnet. Seitlich neben dem Getränkeauslauf 3 befindet sich eine weitere Ausgabedüse 17, die beispielsweise zur Abgabe von Heißwasser oder Wasserdampf Verwendung findet. In dem Ausgabebereich 2 ist im vorliegenden Fall keine Abtropfplatte 4 eingesetzt. Unterhalb der Ausgabedüsen 15, 16, 17 ist eine Senke 18 erkennbar, die sich vom seitlichen Randbereich des Ausgabebereiches 2 bis hin zu ihrem tiefsten Punkt, einer Öffnung 19, erstreckt, die dazu dient, überschüssige Flüssigkeitsreste oder Getränkereste aus den jeweiligen Ausgabedüsen 15, 16, 17 in die darunter befindliche Abtropfschale 5 abzuführen.

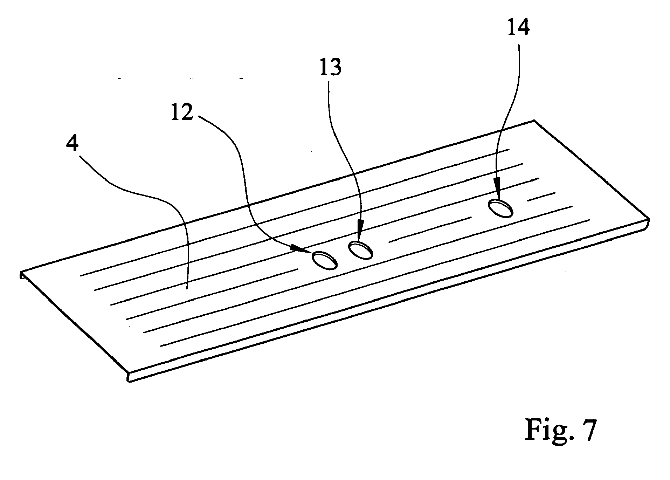

Schließlich zeigt die Figur 7 eine Abtropfplatte 4 als Einzelteildarstellung, wie sie beispielsweise als Boden innerhalb eines Ausgabebereiches 2 eines Getränkebereiters zum Einsatz kommen kann. Die Abtropfplatte 4 ist überwiegend eben ausgeführt und weist insgesamt eine sehr geringe Strukturierung auf, was ihre Reinigungsmöglichkeiten entscheidend verbessert. Etwa im Bereich der Ausgabedüsen 15, 16 verfügt die Abtropfplatte 4 über je eine Öffnung 12 beziehungsweise 13 für jede der Ausgabedüsen 15 beziehungsweise 16, die gleichfalls als Eingriffsöffnung zur Erleichterung der Entnahme der Abtropfplatte 4 beziehungsweise zur Erleichterung des Einsetzens der Abtropfplatte 4 dienen können. Im rechten Bildteil ist eine weitere Öffnung 14 in der Abtropfplatte 4 vorhanden, die etwa unterhalb der Ausgabedüse 17 angeordnet und zudem als Eingriffsloch nutzbar ist, so dass die Abtropfplatte 4 auf einfache Weise aus dem Ausgabebereich 2 entnommen und wieder in diesen eingesetzt werden kann.

### Bezugszeichenliste:

1. Tür
2. Ausgabebereich
3. Getränkeauslauf
4. Abtropfplatte
5. Abtropfschale
6. Innenseite der Tür
7. Halterung
8. Auffangschale
9. Innengeometrie der Halterung
10. Außenoberfläche der Auffangschale
11. Randflansch
12. Öffnung
13. Öffnung
14. Öffnung
15. Ausgabedüse
16. Ausgabedüse
17. Ausgabedüse
18. Senke
19. Öffnung
20. Steg
21. Innenoberfläche
22. Geräteboden
23. Randflansch

## Patentansprüche

1. Getränkebereiter zur Herstellung unterschiedlicher Getränke, als Einbaugerät in einem Küchenschrank, mit einer Tür (1) und einem in der Tür (1) ausgebildeten Ausgabebereich (2), in den zumindest ein Getränkeauslauf (3) mündet und in dem ein zum Abstellen eines mit dem Getränk zu befüllenden Gefäßes geeigneter Boden als eine für Reste des Getränkes oder anderer Flüssigkeiten durchlässige Abtropfplatte (4) ausgeführt ist, wobei sich unterhalb der Abtropfplatte (4) eine geräteseitig angebrachte Abtropfschale (5) zum Auffangen von Flüssigkeitsresten sowie an der Innenseite (6) der Tür (1) eine Auffangschale (8) zum Auffangen der bei geöffneter Tür (1) tropfenweise abgegebenen Getränke- und/oder Flüssigkeitsreste befindet,
**dadurch gekennzeichnet, dass**
an der Innenseite (6) der Tür (1) eine Halterung (7) vorhanden ist, in die die Auffangschale (8) lösbar eingesetzt ist.

2. Getränkebereiter nach Anspruch 1,
**dadurch gekennzeichnet, dass**
die Halterung (7) mit der Auffangschale (8) bei geschlossener Tür (1) unterhalb der Abtropfschale (5) angeordnet ist.

3. Getränkebereiter nach Anspruch 1,
**dadurch gekennzeichnet, dass**
die Halterung (7) mit der Auffangschale (8) bei geschlossener Tür (1) in eine hierfür in der Abtropfschale (5) ausgebildete Mulde eingeführt ist.

4. Getränkebereiter nach einem der vorstehend genannten Ansprüche,
**dadurch gekennzeichnet, dass**
die Auffangschale (8) aus geschirrspülmaschinenfestem Kunststoff besteht

5. Getränkebereiter nach einem der vorstehend genannten Ansprüche,
**dadurch gekennzeichnet, dass**
die Auffangschale (8) eine zu der Innengeometrie (9) der Halterung (7) komplementär ausgebildete Außenoberfläche (10) aufweist, sodass die Auffangschale (8) passgenau in die Halterung (7) einsetzbar ist.

6. Getränkebereiter nach einem der vorstehend genannten Ansprüche,
**dadurch gekennzeichnet, dass**
die Auffangschale (8) einen Randflansch (11) aufweist, der breiter ausgeführt ist, als die darunter befindliche Halterung (7).

7. Getränkebereiter nach einem der vorstehend genannten Ansprüche,
**dadurch gekennzeichnet, dass**
die Auffangschale (8) zumindest einen als Griff ausgebildeten Abschnitt aufweist.

8. Getränkebereiter nach einem der vorstehend genannten Ansprüche,
**dadurch gekennzeichnet, dass**
die herausnehmbare Abtropfplatte (4) zumindest eine Öffnung (12, 13, 14) zur Abführung der Flüssigkeitsreste aufweist.

9. Getränkebereiter nach Anspruch 8,
**dadurch gekennzeichnet, dass**
die Abtropfplatte (4) zumindest eine der Anzahl der Ausgabedüsen (15, 16, 17) entsprechende Anzahl Öffnungen (12, 13, 14) aufweist und die Öffnungen (12, 13, 14) unmittelbar unter den Ausgabedüsen (15, 16, 17) angeordnet sind.

10. Getränkebereiter nach Anspruch 8 oder 9,
**dadurch gekennzeichnet, dass**
unterhalb der Abtropfplatte (4) eine Senke (18) mit wenigstens einer zentralen Abflussöffnung (19) ausgebildet ist.

11. Getränkebereiter nach Anspruch 10,
**dadurch gekennzeichnet, dass**
die Senke (18) von den Randbereichen der Abtropfplatte (4) ausgehend bis zu der mindestens einen Abflussöffnung (19) hin verläuft.

12. Getränkebereiter nach einem der vorstehend genannten Ansprüche,
**dadurch gekennzeichnet, dass**
die Abtropfplatte (4) einen Griff oder eine Grifföffnung (14) aufweist.

## Claims

1. Beverage preparation machine for producing various beverages, as a fitted appliance in a kitchen cupboard, comprising a door (1) and a dispensing region (2) formed in the door (1), into which region at least one beverage outlet (3) discharges and in which region a base which is suitable for placing a vessel to be filled with the beverage is constructed as a drip plate (4) which allows residues of the beverage or other liquids to pass through, a drip tray (5) for collecting liquid residues being attached below the drip plate (4) on the appliance side and a collection tray (8) for collecting beverage and/or liquid residues which drip drown when the door (1) is open being located on the inside (6) of the door (1), **characterised in that** a mounting (7) is provided on the inner face (6) of the door (1), into which mounting the collection tray (8) is detachably inserted.

2. Beverage preparation machine according to claim 1, **characterised in that**, when the door (1) is closed, the mounting (7), together with the collection tray (8), is arranged below the drip tray (5).

3. Beverage preparation machine according to claim 1, **characterised in that**, when the door (1) is closed, the mounting (7), together with the collection tray (8), is introduced into a cavity formed for this purpose in the drip tray (5).

4. Beverage preparation machine according to any of the preceding claims, **characterised in that** the collection tray (8) is made of a dishwasher-safe plastics material.

5. Beverage preparation machine according to any of the preceding claims, **characterised in that** the collection tray (8) comprises an outer surface (10) which complements the inner geometry (9) of the mounting (7), such that the collection tray (8) can be inserted into the mounting (7) with an exact fit.

6. Beverage preparation machine according to any of the preceding claims, **characterised in that** the collection tray (8) comprises an edge flange (11) which is wider than the mounting (7) located therebelow.

7. Beverage preparation machine according to any of the preceding claims, **characterised in that** the collection tray (8) comprises at least one portion formed as a grip.

8. Beverage preparation machine according to any of the preceding claims, **characterised in that** the removable drip plate (4) comprises at least one opening (12, 13, 14) for discharging the liquid residues.

9. Beverage preparation machine according to claim 8, **characterised in that** the drip plate (4) comprises a number of openings (12, 13, 14) which corresponds at least to the number of dispensing nozzles (15, 16, 17) and **in that** the openings (12, 13, 14) are arranged directly below the dispensing nozzles (15, 16, 17).

10. Beverage preparation machine according to either claim 8 or claim 9, **characterised in that** a trough (18) having at least one central drainage opening (19) is formed below the drip plate (4).

11. Beverage preparation machine according to claim 10, **characterised in that** the trough (18) extends proceeding from the edge regions of the drip plate (4) as far as the at least one drainage opening (19).

12. Beverage preparation machine according to any of the preceding claims, **characterised in that** the drip plate (4) comprises a grip or a grip opening (14).

## Revendications

1. Appareil de préparation de boissons pour la réalisation de différentes boissons, sous forme d'appareil encastrable dans un placard de cuisine, avec une porte (1) et une zone de distribution (2) constituée dans la porte (1) et dans laquelle débouche au moins une sortie de boisson (3) et dans laquelle un fond approprié pour poser un récipient devant être rempli par la boisson est réalisé en tant que plaque d'égouttement (4) perméable à des restes de la boisson ou d'autres liquides, un bac d'égouttement (5) placé côté appareil étant situé au-dessous de la plaque d'égouttement (4) pour récupérer des restes de liquide, et un bac de récupération se trouvant sur le côté intérieur (6) de la porte (1) pour récupérer les restes de boisson et/ou de liquide distribués goutte à goutte quand la porte (1) est ouverte,
**caractérisé en ce que**,
sur le côté intérieur (6) de la porte (1), il y a une retenue (7) dans laquelle le bac de récupération (8) est inséré de façon amovible.

2. Appareil de préparation de boissons selon la revendication 1,
**caractérisé en ce que**
la retenue (7) avec le bac de récupération (8) est disposée au-dessous du bac d'égouttement (5) quand la porte (1) est fermée.

3. Appareil de préparation de boissons selon la revendication 1,
**caractérisé en ce que**
la retenue (7) avec le bac de récupération (8) est, quand la porte (1) est fermée, introduite dans un creux constitué pour cela dans le bac d'égouttement (5).

4. Appareil de préparation de boissons selon une des revendications citées précédemment,
**caractérisé en ce que**
le bac de récupération (8) est réalisé en matière plastique pouvant être lavé dans un lave-vaisselle.

5. Appareil de préparation de boissons selon une des revendications citées précédemment,
**caractérisé en ce que**
le bac de récupération (8) présente une surface extérieure (10) constituée de façon complémentaire de la géométrie intérieure (9) de la retenue (7) de telle sorte que le bac de récupération (8) peut être inséré en ajustement précis dans la retenue (7).

6. Appareil de préparation de boissons selon une des revendications citées précédemment,
**caractérisé en ce que**
le bac de récupération (8) présente une bride de bordure (11) qui est plus large que la retenue (7) située au-dessous.

7. Appareil de préparation de boissons selon une des revendications citées précédemment,
**caractérisé en ce que**
le bac de récupération (8) présente au moins un segment constitué en tant que poignée.

8. Appareil de préparation de boissons selon une des revendications citées précédemment,
**caractérisé en ce que**
la plaque d'égouttage (4) extractible présente au moins une ouverture (12, 13, 14) pour l'évacuation des restes de liquide.

9. Appareil de préparation de boissons selon la revendication 8,
**caractérisé en ce que**
la plaque d'égouttage (4) présente au moins un nombre d'ouvertures (12, 13, 14) correspondant au nombre de buses de distribution (15, 16, 17), et les ouvertures (12, 13, 14) sont disposées immédiatement sous les buses de distribution (15, 16, 17)

10. Appareil de préparation de boissons selon la revendication 8 ou 9,
**caractérisé en ce que**,
au-dessous de la plaque d'égouttage (4), il est constitué une dépression (18) avec au moins une ouverture d'écoulement de sortie (19) centrale.

11. Appareil de préparation de boissons selon la revendication 10,
**caractérisé en ce que**
la dépression (18) part des zones marginales de la plaque d'égouttage (4) et s'étend jusqu'à l'au moins une ouverture d'écoulement de sortie (19).

12. Appareil de préparation de boissons selon une des revendications citées précédemment,
**caractérisé en ce que**
la plaque d'égouttage (4) présente une poignée ou une ouverture de prise (14).
